# EUROPEAN PATENT SPECIFICATION

(11) **EP 1 563 933 B1**
(45) Date of publication and mention of the grant of the patent: **25.10.2006**
(21) Application number: 05002999.0
(22) Date of filing: 12.02.2005
(51) Int. Cl.: B23B 27/14, C22C 29/08

(54) **Cutting tool for bimetal machining**
Schneidwerkzeugeinsatz zur bearbeitung von Bimetall
Outil coupant pour usiner des bimétaux

(30) Priority: 17.02.2004 SE 0400353
(43) Date of publication of application: 17.08.2005
(73) Proprietor: Sandvik Intellectual Property AB, 811 81 Sandviken (SE)
(72) Inventor: Hessman, Ingemar, 811 54 Sandviken (SE)
(74) Representative: Taquist, Henrik Lennart Emanuel

(56) References cited:
- EP-A- 0 709 484
- EP-A- 0 736 615
- EP-A- 0 753 603
- EP-A- 1 008 673
- EP-A- 1 103 635
- EP-A- 1 205 569
- EP-A- 1 352 697
- SE-C2- 511 089
- SE-C2- 514 284
- US-A- 5 786 069
- US-A- 6 062 776
- US-B1- 6 200 671
- US-B1- 6 261 673
- US-B1- 6 406 224

## Description

The present invention relates to coated cemented carbide cutting tool inserts for bimetal machining under wet conditions at moderate cutting speeds particularly useful for face milling of engine blocks comprising alloys of aluminium and/or magnesium and cast iron.

In a modern automobile the engine block is one of the heaviest single components. Making the block in a bimetallic manner, such as by fabricating it from an aluminium alloy and placing cast iron sleeves into the cylinder bores substantially reduces the weight of the block compared to conventional cast iron blocks. The aluminium alloy generally contains 5-10 wt-% Si as well as small amounts of other additions. The cast iron is generally grey cast iron but also pearlitic cast iron is used. The machining of a block as cast to final shape and dimension is generally made in transfer lines or flexible machining centres and the time pressure is high. An important step of the engine block manufacturing process is to provide the block with a flat upper surface for mating with the cylinder head. Often this operation is a bottleneck in the production. Machining of conventional unimetallic engine blocks (i.e. cast iron) is generally accomplished by common machining processes such as high speed milling utilizing ceramic inserts, such as silicon nitride, coated cemented carbide on the milling head. Although satisfactory when utilized for unimetallic blocks, this approach tends to produce undesirable results when used with blocks fabricated from two materials, one of which is soft, i.e., aluminium normally requires a rather high cutting speed, and the other of which is brittle, i.e., cast iron normally requires a lower cutting speed when coated cemented carbide is used. For machining of aluminium polycrystalline diamond (PCD) is generally used. Such tools are relatively expensive, however, and wear rapidly in iron containing materials such as cast iron. Moreover, optimal milling for soft versus brittle materials is different. For example, most high-speed milling cutters made for softer materials, such as aluminium, operate most efficiently at substantially greater rake angles than those used for harder materials such as cast iron. Clearance angles, or the angle between the land and a tangent to the cutter from the tip of the tooth, also depend on the various work materials. Cast iron typically requires values of 4 to 7 degrees, whereas soft materials such as magnesium, aluminium, and brass are cut efficiently with clearance angles of 10 to 12 degrees.

Milling cutters with close pitch are used which leads to change of about 30-40 inserts when they are worn out. One typical wear mechanism is built up edge which leads to a bad surface finish and failure of the cutting edge which leads to rapid wear. The main reason for tool change is surface finish and demands are high which leads to frequent tool changes.

Wet milling is used due to surface finish and chip evacuation. Emulsions used in machining are environmental and health problems and lead to a higher cost.

EP-A-1335807 relates to a method of milling a material comprising aluminium and cast iron. By using a silicon nitride based cutting tool insert at a cutting speed of more than 1000 m/min, an unexpected increase in tool life has been obtained. However, not all transfer lines or flexible machining centres have speed capability >600 m/min.

EP-A-1205569 discloses coated milling inserts particularly useful for milling of grey cast iron, with or without cast skin, under wet conditions at low and moderate cutting speeds and milling of nodular cast iron and compacted graphite iron, with or without cast skin, under wet conditions at moderate cutting speeds. The inserts are characterized by a WC-Co cemented carbide with a low content of cubic carbides and a highly W-alloyed binder phase and a coating including an inner layer of TiCₓN_{y} with columnar grains followed by a layer of κ-Al₂O₃ and a top layer of TiN.

It is an extremely high demand to develop tool solutions with a long tool life and less frequent tool changes.

It is an object of the present invention to provide a cutting tool insert particularly useful for machining of bimetal materials.

It is a further object of the present invention to provide an improved method of machining bimetal materials with long tool lives requiring less frequent tool changes.

It has now surprisingly been found that improved performance when machining bimetal materials can be obtained with a coated cutting insert consisting of
- a substrate with the following composition: WC, 9-11, preferably 10 wt-% Co and suitable amount of conventional grain refiner(s) such as Cr, or V, preferably <0.5 wt-% Cr, to obtain an average WC grain size of <1 µm and
- a coating comprising
- a first, innermost, layer of TiCₓN_{y}O_{z} with x+y+z=1, y>x and z<0.2, preferably y>0.8 and z=0, with equiaxed grains with size <0.5 µm and a total thickness <1.5 µm, preferably >0.1 µm.
- a layer of TiCₓN_{y} with x+y=1, x>0.3 and y>0.3, preferably x≥0.5, with a thickness of 1-4 µm, preferably 2-2.7 µm, with columnar grains with an average diameter of <5 µm, preferably 0.1-2 µm
- a layer of a smooth, fine-grained, grain size about 0.5-2 µm, Al₂O₃ consisting essentially of the κ-phase. However, the layer may contain small amounts (<5 vol-%) of other phases such as θ- or the α-phase as determined by XRD-measurement. The Al₂O₃-layer has a thickness of 1-2.5 µm, preferably 1.2-1.7 µm.
- a further <1 µm, preferably 0.5-1.0 µm thick layer of TiN. This outermost layer of TiN has a surface roughness Rₘₐₓ≤0.4 µm over a length of 10 µm. The inserts have an edge radius of 10-25 µm, preferably 15 µm and a TiN-layer reduced in thickness over the edge line to 50-90 % of the thickness on the rake face.

The present invention also relates to a method of making coated cutting tool inserts consisting of a cemented carbide body with a composition of WC, 9-11 preferably 10 wt-% Co and suitable amount of conventional grain refiner(s) such as Cr, or V, preferably <0.5 wt-% Cr, to obtain an average WC grain size of <1 µm. The inserts are ground on the periphery to an edge hone of 10-25 µm, preferably 15 µm.

Onto the cemented carbide body is deposited
- a first, innermost layer of TiCₓN_{y}O_{z} with x+y+z=1, y>x and z<0.2, preferably y>0.8 and z=0, with equiaxed grains with size <0.5 µm and a total thickness <1.5, preferably >0.1 µm, using known CVD-methods.
- a layer of TiCₓN_{y} with x+y=1, x>0.3 and y>0.3, preferably x≥0.5, with a thickness of 1-4 µm, preferably 2-2.7 µm, with columnar grains and with an average diameter of <5 µm, preferably 0.1-2 µm, using preferably MTCVD-technique using acetonitrile as the carbon and nitrogen source for forming the layer in the temperature range of 700-900 °C. The exact conditions, however, depend to a certain extent on the design of the equipment used.
- a smooth Al₂O₃-layer essentially consisting of κ-Al₂O₃ deposited under conditions disclosed in e.g. US 5,674,564. The κ-Al₂O₃ layer has a thickness of 1-2.5 µm, preferably 1.2-1.7 µm
- a <1 µm, preferably 0.5-1.0 µm thick layer of TiN with a surface roughness Rₘₐₓ≤0.4 µm over a length of 10 µm.

The smooth coating surface is obtained by a gentle wet-blasting of the coating surface with fine grained (400-150 mesh) alumina powder or by brushing the edges with brushes based on e.g. SiC as disclosed e.g. in US 5,861,210 to obtain an edge radius of 10-25 µm, preferably 15 µm, and a TiN-layer reduced in thickness over the edge line to 50-90 % of the thickness on the rake face.

The invention also relates to the use of cutting tool inserts, as described above, for machining, preferably milling, of bimetal bodies comprising cast irons such as grey cast iron, compacted graphite iron and nodular iron particularly grey cast iron and aluminium and/or magnesium alloys at a cutting speed of 200 - 500 m/min and a feed of 0.1-0.4 mm/tooth depending on cutting speed and insert geometry.

### Example 1

Cemented carbide machining inserts with the composition 10 wt-% Co, 0.4 wt-% Cr and rest WC with average grain size of 0.9 µm, and an edge hone of 15 µm were coated with a 0.5 µm equiaxed TiC_{0.05}N_{0.95}-layer (with a high nitrogen content corresponding to an estimated C/N-ratio of 0.05) followed by a 2.0 µm thick TiC_{0.54}N_{0.46}-layer, with columnar grains by using MTCVD-technique (temperature 850-885 °C and CH₃CN as the carbon/nitrogen source). In subsequent steps during the same coating cycle, a 1.5 µm thick layer of κ-Al₂O₃ was deposited using a temperature 970 °C and a concentration of H₂S dopant of 0.4 % as disclosed in US 5,674,564. A 0.5 layer of TiN was finally deposited on top according to known CVD-technique. XRD-measurement showed that the Al₂O₃-layer consisted of 100% κ-phase.

The coated inserts were brushed using a nylon straw brush containing SiC grains. Examination of the brushed inserts in a light optical microscope revealed that the outermost TiN-layer had been somewhat reduced in thickness. The edge radius was about 15 µm.

### Example 2

Face milling of engine blocks was performed under the following conditions:

| | |
|---|---|
| Operation: | Face milling, finishing in wet conditions |
| Work piece: | 4 to 6 cylinder engine block consisting of aluminium 8% Si and cylinder liners of pearlitic grey cast iron with a diameter of about 10 cm and a wall thickness of about 10 mm. |
| Milling cutter: | Auto F 260.42 of diameter 250 mm. |
| Cutting speed: | 360 m/min |
| Feed rate/tooth: | 0.24 mm |
| Depth of cut: | 0.5 mm |
| Insert style: | 28 pcs SBEX1203ZZ-11 and 4 pcs SBEN1203ZZ |
| Grade 1: | Invention (NAB). |
| Grade 2: | Sandvik commercial grade K20W |
| Tool life criterion: | Unacceptable surface finish including component frittering. |

Result: (Because of varying number of cylinders in the blocks the result is expressed in units i.e. number of cylinders)

| | | |
|---|---|---|
| | Grade 1 | Grade 2 |
| | invention | reference |
| Tool life no passes: | 4500 units | 3000 units |

### Example 3

Face milling of bedplate was performed under the following conditions:

| | |
|---|---|
| Operation: | Face milling, finishing wet conditions |
| Work piece: | Bedplate consisting of aluminium 8 % Si and about 15-30 mm square nodular cast iron ingots |
| Milling cutter: | Sandvik R260.8-145-12 of diameter 315 mm. |
| Cutting speed: | 350m/min |
| Feed rate/tooth: | 0.17 mm |
| Depth of cut: | 0.7 mm |
| Insert style: | R245-12T3E-PL |
| Grade 1: | Invention (NAT). |
| Grade 2: | Sandvik commercial grade K20W (coated) |

Tool life criterion: Unacceptable surface finish including component frittering.

Results (Because of varying number of cylinders in the blocks the result is expressed in units i.e. number of cylinders):

| | | |
|---|---|---|
| | Grade 1 invention | Grade 2 reference |
| Tool life: | 1300 units | 900 - 1000 units |

## Claims

1. A cutting tool insert particularly useful for machining of bimetal bodies comprising cast iron and aluminium and/or magnesium alloys under wet conditions at moderate cutting speeds comprising a cemented carbide body and a coating **characterized**
**in** a substrate with the following composition: WC, 9-11, preferably, 10 wt-% Co and suitable amount of conventional grain refiner(s) to obtain an average WC grain size of <1 µm and
**in** a coating comprising
- a first, innermost layer of TiCₓN_{y}O_{z} with x+y+z=1, y>x and z<0. 2, preferably y>0.8, and z=0, with equiaxed grains with size <0.5 µm and a total thickness of 0.1-1.5 µm.
- a layer of TiCₓN_{y} with x+y=1, x>0.3 and y>0.3, preferably x≥0.5, with a thickness of 1-4 µm with columnar grains with an average diameter of <5 µm
- a layer of a smooth, fine-grained, 0.5-2 µm κ-Al₂O₃ with a thickness of 1-2.5 µm and
- an outer layer of TiN with a thickness of <1 µm, preferably 0.5-1.0 µm.

2. Insert according to claim 1 **characterized in that** said grain refiner(s) include Cr or V, preferably <0.5 wt-% Cr.

3. Insert according to any of the preceding claims
**characterized in that** the outermost TiN-layer is reduced in thickness along the cutting edge.

4. Insert according to any of the preceding claims
**characterized in that** said insert is an insert for milling.

5. Method of making a cutting tool insert particularly useful for machining of bimetal bodies comprising cast iron and aluminium and/or magnesium alloys under wet conditions at moderate cutting speeds comprising a cemented carbide body and a coating
**characterized in that** a substrate with the following composition: WC, 9-11, preferably 10 wt-% Co, and suitable amount of conventional grain refiner(s) to obtain an average WC grain size of <1 µm is coated with
- a first, innermost layer of TiCₓNyO_{z} with x+y+z=1, y>x and z<0.2, preferably y>0.8 and z=0, with equiaxed grains with size <0.5 µm and a total thickness of 0.1-1.5 µm using known CVD-methods
- a layer of TiCₓN_{y} with x+y=1, x>0.3 and y>0.3, preferably x≥0.5, with a thickness of 1-4 µm with columnar grains with an average diameter of <5 µm deposited by MTCVD-technique, using acetonitrile as the carbon and nitrogen source for forming the layer in a temperature range of 700-900 °C.
- a layer of a smooth CVD-κ-Al₂O₃ with a thickness of 1-2.5 µm and
- a layer of CVD-TiN with a thickness of <1 µm, preferably 0.5-1.0 µm.

6. Method according to the previous claim
**characterized in said** grain refiner(s) include Cr or V, preferably <0.5 wt-% Cr.

7. Method according to any of the claims 5 and 6
**characterized in that** the outermost TiN-layer is reduced in thickness along the cutting edge.

8. Use of a cutting tool insert according to claims 1-4 for machining of a bimetal body comprising cast iron and aluminium and/or magnesium alloys under wet conditions at moderate cutting speeds.

9. Use according to claim 8 **characterized in that** said machining operation is milling.

10. Use according to claim 8 **characterized in that** said body is an engine block or a bedplate.

## Patentansprüche

1. Schneidwerkzeugeinsatz, der insbesondere für die Bearbeitung von Bimetallkörpern, die Gußeisen und Aluminium- und/oder Magnesium-Legierungen enthalten, unter Naßbedingungen bei mäßigen Schneidgeschwindigkeiten geeignet ist und einen Hartmetallkörper und eine Beschichtung umfaßt, **gekennzeichnet durch**
ein Substrat mit der folgenden Zusammensetzung: WC, 9-11 Gew.-%, vorzugsweise 10 Gew.-% Co und geeignete Mengen von herkömmlichem Kornverfeinerer oder herkömmlichen Kornverfeinerern zum Erhalt einer mittleren WC-Korngröße von < 1 µm und
eine Beschichtung mit
- einer ersten, innersten Lage aus TiCₓN_{y}O_{z} mit x + y + z =1, y > x und z < 0,2, vorzugsweise y > 0,8 und z = 0 mit gleichachsigen Körnern mit einer Größe < 0,5 µm und einer Gesamtdicke von 0,1-1,5 µm,
- einer Schicht aus TiCₓN_{y} mit x + y = 1, x > 0,3 und y > 0,3, vorzugsweise x ≥ 0,5, mit einer Dicke von 1-4 µm mit säulenförmigen Körnern mit einem mittleren Durchmesser von < 5 µm,
- einer Schicht aus einem glatten, feinkörnigen κ-Al₂O₃ von 0,5-2 µm mit einer Dicke von 1-2,5 µm und
- einer äußeren Lage aus TiN mit einer Dicke von < 1 µm, vorzugsweise 0,5-1,0 µm.

2. Einsatz nach Anspruch 1, **dadurch gekennzeichnet, daß** der/die Kornverfeinerer Cr oder V, vorzugsweise < 0,5 Gew.-% Cr, umfaßt/umfassen.

3. Einsatz nach einem der vorangegangenen Ansprüche, **dadurch gekennzeichnet, daß** die äußerste TiN-Lage entlang der Schneidkante eine verminderte Dicke hat.

4. Einsatz nach einem der vorangegangenen Ansprüche, **dadurch gekennzeichnet, daß** der Einsatz ein Einsatz zum Fräsen ist.

5. Verfahren zur Herstellung eines Schneidwerkzeugeinsatzes, der insbesondere für die Bearbeitung von Bimetallkörpern, die Gußeisen und Aluminium- und/oder Magnesiumlegierungen enthalten, unter Naßbedingungen bei mäßigen Schneidgeschwindigkeiten geeignet ist und einen Hartmetallkörper und eine Beschichtung umfaßt, **dadurch gekennzeichnet, daß** ein Substrat mit der folgenden Zusammensetzung: WC, 9-11 Gew.%, vorzugsweise 10 Gew.-% Co und geeignete Mengen von herkömmlichem Kornverfeinerer oder herkömmlichen Kornverfeinerern zum Erhalt einer mittleren WC-Korngröße von < 1 µm beschichtet wird mit
- einer ersten, innersten Lage aus TICₓN_{y}O_{z} mit x + y + z = 1, y > x und z < 0,2, vorzugsweise y > 0,8 und z = 0, mit gleichachsigen Körnern mit einer Größe < 0,5 µm und einer Gesamtdicke von 0,1-1,5 µm unter Verwendung bekannter CVD-Verfahren,
- einer Lage aus TiCₓN_{y} mit x + y = 1, x > 0,3 und y > 0,3, vorzugsweise x ≥ 0,5, mit einer Dicke von 1-4 µm mit säulenförmigen Körnern mit einem mittleren Durchmesser von < 5 µm, abgeschieden mittels MTCVD-Technik unter Verwendung von Acetonitril als die Kohlenstoff- und Stickstoffquelle für die Ausbildung der Lage in einem Temperaturbereich von 700-900°C,
- einer Lage aus einem glatten CVD-κ-Al₂O₃ mit einer Dicke von 1-2,5 µm und
- einer Lage aus CVD-TiN mit einer Dicke von < 1 µm, vorzugsweise 0,5-1,0 µm.

6. Verfahren nach dem vorausgegangenen Anspruch, **dadurch gekennzeichnet, daß** der/die Kornverfeinerer Cr oder V, vorzugsweise < 0,5 Gew.-% Cr, umfaßt bzw. umfassen.

7. Verfahren nach einem der Ansprüche 5 und 6, **dadurch gekennzeichnet, daß** die äußerste TiN-Lage entlang der Schneidkante eine verminderte Dicke hat.

8. Verwendung eines Schneidwerkzeugeinsatzes nach einem der Ansprüche 1 bis 4 für die Bearbeitung eines Bimetallkörpers, der Gußeisen und Aluminium- und/oder Magnesium-Legierungen enthält, unter Naßbedingungen bei mäßigen Schneidgeschwindigkeiten.

9. Verwendung nach Anspruch 8, **dadurch gekennzeichnet, daß** der Bearbeitungsvorgang Fräsen ist.

10. Verwendung nach Anspruch 8, **dadurch gekennzeichnet, daß** der Körper ein Motorblock oder eine Grundplatte ist.

## Revendications

1. Plaquette pour outil de coupe particulièrement utile pour l'usinage de corps bimétalliques comprenant de la fonte et des alliages d'aluminium et/ou de magnésium dans des conditions humides à des vitesses de coupe modérées, comprenant un corps de carbure cémenté et un revêtement, **caractérisée**
**par** un substrat ayant la composition suivante : WC, de 9 à 11 % en poids de Co, de préférence 10 % en poids de Co, et une quantité appropriée d'un agent affineur ou d'agents affineurs de grains classiques afin d'obtenir une taille de grains de WC moyenne < 1 µm et
par un revêtement comprenant
- une première couche, la plus à l'intérieur, de TiCₓN_{y}O_{z}, avec x + y + z = 1, y > x et z < 0,2, de préférence y > 0,8 et z = 0, ayant des grains équiaxes ayant une taille < 0,5 µm et une épaisseur totale de 0,1 à 1,5 µm,
- une couche de TiCₓN_{y}, avec x + y = 1, x > 0,3 et y > 0,3, de préférence x ≥ 0,5, avec une épaisseur de 1 à 4 µm et des grains en colonnes ayant un diamètre moyen < 5 µm,
- une couche lisse, à grains fins, de κ-Al₂O₃ de 0,5 à 2 µm, ayant une épaisseur de 1 à 2,5 µm et
- une couche extérieure de TiN ayant une épaisseur < 1 µm, de préférence de 0,5 à 1,0 µm.

2. Plaquette selon la revendication 1, **caractérisée en ce que** ledit ou lesdits agents affineurs de grains comprennent du Cr ou du V, de préférence moins de 0,5 % en poids de Cr.

3. Plaquette selon l'une quelconque des revendications précédentes, **caractérisée en ce que** l'épaisseur de la couche de TiN la plus à l'extérieur est réduite le long de l'arête de coupe.

4. Plaquette selon l'une quelconque des revendications précédentes, **caractérisée en ce que** ladite plaquette est une plaquette destinée au fraisage.

5. Procédé de réalisation d'une plaquette pour outil de coupe particulièrement utile pour l'usinage de corps bimétalliques comprenant de la fonte et des alliages d'aluminium et/ou de magnésium dans des conditions humides à des vitesses de coupe modérées, comprenant un corps de carbure cémenté et un revêtement, **caractérisé en ce qu'**un substrat présentant la composition suivante : WC, de 9 à 11 % en poids de Co, de préférence 10 % en poids de Co, et une quantité appropriée d'un agent affineur ou d'agents affineurs de grains classiques pour obtenir une taille de grains de WC moyenne < 1 µm, est recouvert
d'une première couche, la plus à l'intérieur, de TiCₓN_{y}O_{z}, avec x + y + z = 1, y > x et z < 0,2, de préférence y > 0,8 et z = 0, ayant des grains équiaxes d'une taille < 0,5 µm et une épaisseur totale de 0,1 à 1, 5 µm en utilisant des procédés de dépôt CVD connus,
- d'une couche de TiCₓN_{y}, avec x + y = 1, x > 0,3 et y > 0,3, de préférence x ≥ 0,5, ayant une épaisseur de 1 à 4 µm et des grains en colonnes ayant un diamètre moyen < 5 µm déposés par une technique de dépôt MTCVD, en utilisant de l'acétonitrile en tant que source de carbone et d'azote en vue de former la couche dans une plage de températures de 700 à 900 °C,
- d'une couche lisse de κ-Al₂O₃ déposée par dépôt CVD, ayant une épaisseur 1 à 2,5 µm et
- d'une couche de TiN déposée par dépôt CVD ayant une épaisseur < 1 µm, de préférence 0,5 à 1,0 µm.

6. Procédé selon la revendication précédente,
**caractérisé en ce que** ledit agent affineur ou lesdits agents affineurs de grains comprennent du Cr ou du V, de préférence moins de 0,5 % en poids de Cr.

7. Procédé selon l'une quelconque des revendications 5 et 6,
**caractérisé en ce que** la couche de TiN la plus à l'extérieur est réduite en épaisseur le long de l'arête de coupe.

8. Utilisation d'une plaquette pour outil de coupe selon les revendications 1 à 4 en vue d'un usinage d'un corps bimétallique comprenant de la fonte et des alliages d'aluminium et/ou de magnésium dans des conditions humides à des vitesses de coupe modérées.

9. Utilisation selon la revendication 8, **caractérisée en ce que** ladite opération d'usinage est un fraisage.

10. Utilisation selon la revendication 8, **caractérisée en ce que** ledit corps est un bloc-moteur ou une plaque d'assise.
